# EUROPÄISCHE PATENTSCHRIFT

(11) **EP 1 607 001 B1**
(45) Veröffentlichungstag und Bekanntmachung des Hinweises auf die Patenterteilung: **28.02.2007**
(21) Anmeldenummer: 05011175.6
(22) Anmeldetag: 24.05.2005
(51) Int. Cl.: A23B 4/28

(54) **Pökelinjektionsvorrichtung**
Brine injecting machine
Machine d' injection de saumure

(30) Priorität: 17.06.2004 DE 102004029158
(43) Veröffentlichungstag der Anmeldung: 21.12.2005
(73) Patentinhaber: Schröder Maschinenbau KG, 33824 Werther (DE)
(72) Erfinder: Schröder, Helmut, 33824 Werther (DE)
(74) Vertreter: TER MEER - STEINMEISTER & PARTNER GbR

(56) Entgegenhaltungen:
- EP-A- 0 131 120
- EP-A- 0 327 738
- DE-A1- 19 827 685
- DE-C1- 19 726 187
- US-A- 5 012 728
- US-A- 5 569 861

## Beschreibung

Die Erfindung betrifft eine Injektionsvorrichtung mit einer Vielzahl paralleler, hin- und her gehend in ihrer Längsrichtung relativ zu einem Produktträger beweglicher Hohlnadeln und einer Einrichtung zur Zufuhr einer in das Produkt zu injizierenden Flüssigkeit in die Hohlnadeln.

Ein typisches Beispiel einer solchen Injektionsvorrichtung ist eine Pökelmaschine, mit der Pökellake in Fleisch oder sonstige Lebensmittel injiziert wird (siehe z.B. DE 197 26 187 C1).

In einigen Anwendungsfällen ist die Pökellake oder, allgemeiner, die zu injizierende Flüssigkeit relativ hochviskos, oder sie enthält dispergierte Schwebeteilchen, so daß die Nadeln leicht verstopfen können. Es sind deshalb relativ häufig zeitraubende Betriebsunterbrechnungen erforderlich, um die Nadeln beispielsweise mit einer Spülflüssigkeit zu reinigen (siehe auch DE 195 30 046 C2).

Aufgabe der Erfindung ist es, eine Injektionsvorrichtung zu schaffen, die eine einfache und schnelle Reinigung der Nadeln ermöglicht.

Diese Aufgabe wird erfindungsgemäß dadurch gelöst, daß jeder Hohlnadel eine in diese einführbare Reinigungsnadel zugeordnet ist und daß eine Antriebseinrichtung vorgesehen ist, mit der die Reinigungsnadeln zwischen einer Reinigungsstellung, in der sie in die Hohlnadeln eingeführt sind, und einer Injektionsstellung bewegbar sind, in der sie die Hohlnadeln zu Zufuhr der Flüssigkeit freigeben.

Zum Reinigen der Hohlnadeln braucht somit lediglich die Antriebseinrichtung aktiviert zu werden, um die Reinigungsnadeln in die Hohlnadeln einzuführen, so daß etwa im Inneren der Hohlnadeln anhaftende Verunreinigungen entfernt werden. Wenn die Reinigungsnadeln wieder zurückgezogen werden, kann der Injektionsvorgang unmittelbar fortgesetzt werden.

Vorteilhafte Ausgestaltungen und Weiterbildungen der Erfindung ergeben sich aus den Unteransprüchen.

Bevorzugt sind die Hohlnadeln als sogenannte Kanülen-Nadeln ausgebildet, d.h., als Nadeln, aus denen die zu injizierende Flüssigkeit nicht seitlich, sondern lediglich axial durch ein offenes Ende der Nadel austritt. Die mit Hilfe der Reinigungsnadeln entfernten Verunreinigungen können dann einfach durch das offene Ende der Hohlnadeln ausgestoßen werden, und es besteht keine Gefahr, daß seitliche Austrittsöffnungen der Hohlnadeln verstopfen.

Die Hohlnadeln können wie üblich an einem Nadelregister angeordnet sein, das vertikal beweglich oberhalb eines taktweise betriebenen Förderers angeordnet ist. Die Einrichtung zur Zufuhr der Flüssigkeit ist dann in das Nadelregister integriert und kann beispielsweise durch eine Ventileinrichtung gebildet werden, die durch eine Relativbewegung zwischen dem Nadelnregister und einem Niederhalter gesteuert werden, der sich beim Absenken des Nadelregisters auf das Produkt legt, während die Nadeln weiter in das Produkt einstechen, und der beim Hochziehen der Nadeln das Produkt zurückhält. Wenn beim Aufwärtshub des Nadelregisters der Niederhalter seine tiefste Position relativ zu dem Nadelregister erreicht, wird durch das Ventil die Lakezufuhr unterbrochen, so daß die Lake nur in den Betriebsphasen injiziert wird, in denen die Nadeln tatsächlich in das Produkt einstechen. Die Reinigungsnadeln sind dann bevorzugt an einem separaten Reinigungsregister angeordnet, das relativ zum Nadelregister beweglich ist.

Wenn die Flüssigkeit nur während des Abwärtshubes des Nadelregisters injiziert wird, können die Reinigungsnadeln schon beim Aufwärtshub des Nadelregisters in die Hohlnadeln einfahren. Bevorzugt wird jedoch auch der Aufwärtshub des Nadelregisters für die Injektion genutzt. In diesem Fall können die Reinigungsnadeln erst dann einfahren, wenn sich die Hohlnadeln oberhalb des Produkts befinden, da andernfalls die Lakezufuhr zu dem Produkt vorzeitig unterbrochen würde.

Bevorzugt ist eine Steuereinrichtung vorgesehen, die die Bewegung des Reinigungsregisters mit der Bewegung des Nadelregisters und vorzugsweise auch mit dem Takt des Förderers synchronisiert. Da das Ein- und Ausfahren der Reinigungsnadeln eine gewisse Zeit in Anspruch nimmt, ist es zweckmäßig, den Reinigungsvorgang nicht bei jedem Takt des Nadelregisters auszuführen, sondern beispielsweise nur bei jedem fünften Takt. Die Zykluszeit des Reinigungsregisters ist dann ein ganzzeiliges Vielfaches der Zykluszeit des Nadelregisters.

Für den Reinigungsvorgang kann die Zeit genutzt werden, in der ein neues Produkt mit dem Förderer in die Bearbeitungsposition unter dem Nadelregister gebracht wird. Dabei kann die Steuereinrichtung dafür sorgen, daß der Takt oder die Transportgeschwindigkeit des Förderers während der Reinigungstakte etwas verzögert wird, so daß ausreichend Zeit für den Reinigungsvorgang zur Verfügung steht.

Im folgenden wird ein Ausführungsbeispiel anhand der Zeichnung näher erläutert.

Es zeigen:
- Fig. 1: einen vertikalen Schnitt durch die wesentlichen Teile einer Pökelmaschine im Zustand unmittelbar vor einem Injektionsvorgang;
- Fig. 2: die Pökelmaschine während des Injektionsvorgangs;
- Fig. 3: die Pökelmaschine während eines Reinigungsvorgangs; und
- Fig. 4: ein Zeitdiagramm zur Erläuterung des Arbeitstaktes der Pökelmaschine

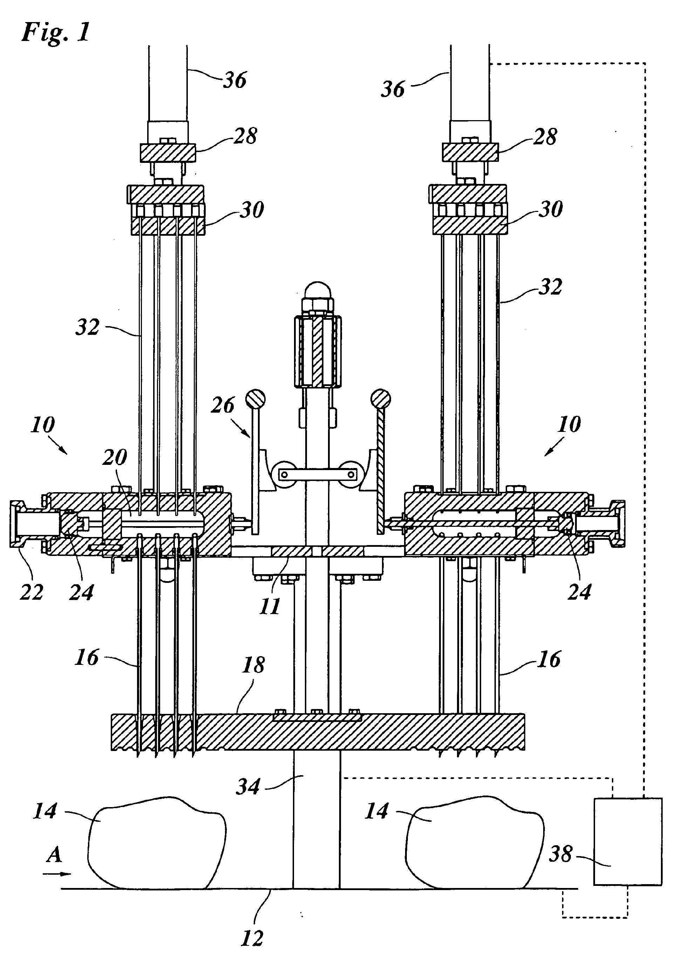

In Figur 1 ist als Beispiel für eine Injektionsvorrichtung eine Pökelmaschine mit zwei Nadelregistern 10 gezeigt, die an einem gemeinsamen Gestell 11 oberhalb eines Förderers 12 angeordnet sind. Auf dem Förderer 12 werden zu pökelnde Produkte 14, beispielsweise Schinken, taktweise in Richtung des Pfeils A transportiert.

Jedes Nadelregister 10 weist einen Satz von Hohlnadeln 16 auf, die sich parallel zueinander abwärts durch einen Niederhalter 18 erstrecken und jeweils am unteren Ende offen sind. Die oberen Enden der Hohlnadeln 16 öffnen sich in eine Lakekammer 20, der über einen Lakezulauf 22 und ein Lakeventil 24 Pökellake zugeführt wird. Zur Steuerung der Lakeventile 24 ist eine Kurvensteuerung 26 vorgesehen, die durch den Niederhalter 18 betätigt wird.

Oberhalb der Nadelregister 10 sind an gestellfesten Aufbauten 28 zwei Reinigungsregister 30 angeordnet, die jeweils einen Satz von Reinigungsnadeln 32 tragen. Jede der Reinigungsnadeln 32 ist einer der Hohlnadeln 16 zugeordnet und erstreckt sich flüssigkeitsdicht durch die obere Wand der Lakekammer 20. In dem in Figur 1 gezeigten Zustand liegen die unteren Enden der Reinigungsnadeln 32 innerhalb der Lakekammern 20, jedoch in Abstand oberhalb der offenen oberen Enden der Hohlnadeln 16. Die Außendurchmesser der Reinigungsnadeln 32 sind an die Innendurchmesser der Hohlnadeln 16 angepaßt. Die Reinigungsnadeln 32 können aus Metall oder wahlweise auch aus Kunststoff oder einem anderen Material bestehen. Sie können ggf. auch als lange, dünne Reinigungsbürsten ausgebildet sein, sofern für einen flüssigkeitsdichten Verschluß der Durchführungen durch die obere Wand der Lakekammern 20 gesorgt ist.

Das die beiden Nadelregister 10 tragende Gestell 11 ist mit Hilfe eines mechanischen, hydraulischen oder pneumatischen Antriebs 34 relativ zum Förderer 12 absenkbar und anhebbar. Der Niederhalter 18 ist vertikal beweglich an dem Gestell 11 geführt und elastisch, beispielsweise pneumatisch, in die in Figur 1 gezeigte untere Endlage vorgespannt, in der die Lakeventile 24 durch die Kurvensteuerung 26 geschlossen gehalten werden. Die Reinigungsregister 30 sind mit Hilfe hydraulischer oder pneumatischer Antriebseinrichtungen 36 in vertikaler Richtung relativ zu den Nadelregistern 10 bewegbar.

Eine elektronische Steuereinrichtung 38 steuert die Arbeitstakte des Förderers 12, des Antriebs 34 für die Nadelregister und der Antriebseinrichtungen 36 für die Reinigungsregister 30.

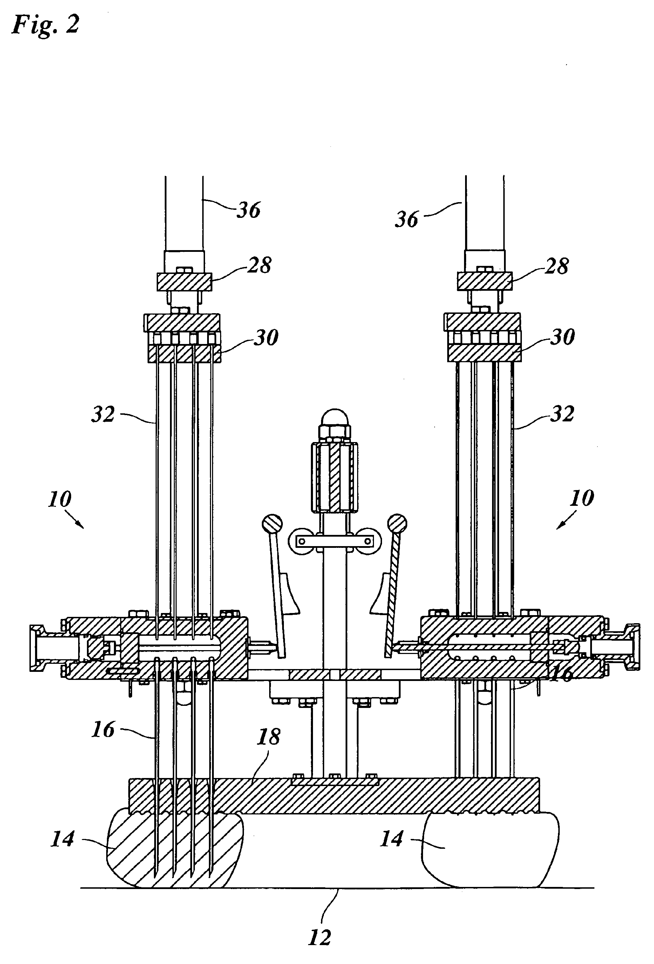

Die Pökelmaschine arbeitet wie folgt. In Figur 1 sind die Produkte 14 mit Hilfe des Förderers 12 in Positionen transportiert worden, in denen sie unmittelbar unter den Hohlnadeln 16 liegen. Der Förderer 12 wird angehalten, und die Nadelregister 10 werden gemeinsam mit den Reinigungsregistern 30 abgesenkt, so daß die Hohlnadeln 16 in die Produkte 14 einstechen, wie in Figur 2 gezeigt ist. Dabei legt sich der Niederhalter 18 auf die Produkte 14 und bewegt sich dann relativ zu den Nadelregistern 10 nach oben, so daß die Lakeventile 24 durch die Kurvensteuerung 26 geöffnet werden. Auf diese Weise wird Pökellake unter Druck in die Produkte 14 injiziert. Beim anschließenden Aufwärtshub der Nadelregister 10 werden die Lakeventile 24 wieder geschlossen, sobald die Hohlnadeln 16 aus den Produkten 14 austreten und sich der Niederhalter 18 wieder von den Produkten abhebt.

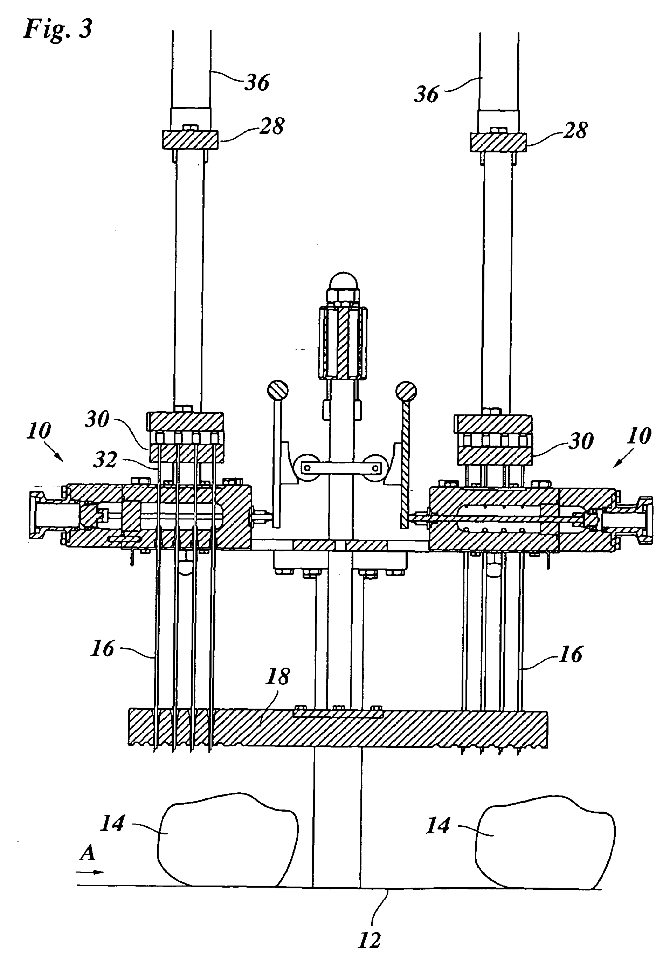

Um eine Verstopfung der Hohlnadeln 16 zu vermeiden, wird von Zeit zu Zeit ein Reinigungsvorgang ausgeführt, der in Figur 3 illustriert ist. Dieser Reinigungsvorgang wird dann ausgeführt, wenn die Nadelregister 10 sich in der angehobenen Position befinden und die Produkte 14 mit Hilfe des Förderers 12 abtransportiert werden. Mit Hilfe der Antriebseinrichtungen 36 werden in diesem Zustand die Reinigungsregister 30 abgesenkt, so daß die Reinigungsnadeln 32 in die Hohlnadeln 16 einfahren. In Figur 3 befinden sich die Reinigungsregister 30 in der maximal abgesenkten Position, und die unteren Enden der Reinigungsnadeln 32 sind etwa mit den unteren Enden der Hohlnadeln 16 bündig, so daß etwaige Verunreinigungen, die in den Hohlnadeln 16 haften geblieben sind, aus den offenen und unverengten unteren Enden der Hohlnadeln ausgestoßen werden. Anschließend werden die Reinigungsregister 30 wieder in die in Figur 1 gezeigte Position angehoben, und damit ist der Reinigungsvorgang beendet.

Die Reinigungsnadeln 32 sind mit verdickten Köpfen auswechselbar in den Reinigungsregistern 30 gehalten, so daß sie bei Bedarf ausgetauscht werden können.

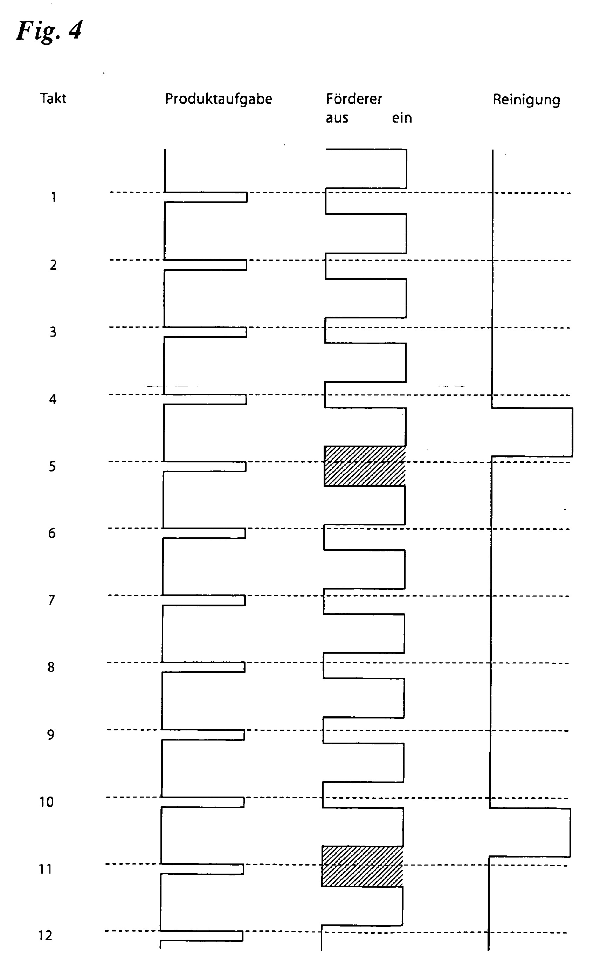

Der Reinigungsvorgang kann im Prinzip bei jedem Takt der Nadelregister 10 durchgeführt werden. In der Praxis genügt es jedoch in der Regel, den Reinigungsvorgang in größeren Intervallen auszuführen, beispielsweise nur bei jedem fünften Takt der Nadelregister. Da der Reinigungsvorgang erst beginnt, nachdem die Hohlnadeln 16 wieder aus den Produkten 14 zurückgezogen worden sind, kann die Pökellake auch während des Aufwärtshubes der Nadelregister 10 in die Produkte 14 injiziert werden, ohne daß die Lakezufuhr zu den Hohlnadeln 16 durch die Reinigungsnadeln 32 unterbrochen wird. Da jedoch das Absenken und Anheben der Reinigungsregister 30 eine gewisse Zeit in Anspruch nimmt, kann für die Arbeitstakte mit Reinigung eine etwas größere Zeit benötigt werden als für die Arbeitstakte ohne Reinigung. Die Steuereinrichtung 38 ist deshalb so ausgelegt, daß sie bei den Takten, in denen ein Reinigungsvorgang stattfinden soll, die Transportgeschwindigkeit oder den Transporttakt des Förderers 12 etwas verzögert, so daß die Takte des Förderers und der Nadelregister 10 miteinander synchronisiert bleiben. Dennoch ist es möglich, die Produkte 14 mit Hilfe einer nicht gezeigten Aufgabevorrichtung in einem festen Zeittakt auf den Förderer 12 aufzugeben und dabei sicherzustellen, daß die Produkte 14 auf dem Förderer 12 gleiche Abstände haben, so daß sie positionsgerecht unter die Nadelregister 10 transportiert werden. Dies ist beispielhaft in Figur 4 dargestellt. Der Einfachheit halber soll hier angenommen werden, daß mit Hilfe der Aufgabevorrichtung jeweils zwei Produkte 14 gleichzeitig auf den Förderer 12 aufgelegt werden, und zwar so, daß der Abstand zwischen den beiden Produkten 14 dem Abstand zwischen den beiden Nadelregistern 10 entspricht.

In Figur 4 ist der zeitliche Ablauf von zwölf Arbeitstakten der Vorrichtung in einem Zeitdiagramm dargestellt. Die linke Kurve in Figur 4 gibt den Takt der Aufgabevorrichtung an. Bei jedem Ausschlag dieser Kurve werden zwei Produkte 14 auf den Förderer aufgelegt. Die mittlere Kurve gibt den Takt des Förderers 12 an. In jedem Einschalttakt wird der Förderer 12, beispielsweise ein Förderband, um eine Strecke bewegt, die so gewählt ist, daß zwei neue Produkte 14 positionsgerecht unter die Nadelregister 10 zugeführt werden. Danach wird der Förderer 12 jeweils für ein Zeitintervall angehalten, während dessen der Injektionsvorgang gemäß Figur 2 stattfindet. Die rechte Kurve in Figur 4 zeigt die Reinigungstakte der Reinigungsregister 30. Es ist zu erkennen, daß ein Reinigungsvorgangs bei jedem fünften Arbeitstakt der Nadelregister ausgeführt wird, und daß jeder Reinigungstakt beginnt, wenn ein Injektionsvorgang abgeschlossen ist und der Einschalttakt des Förderers 12 beginnt. Der Reinigungsvorgang dauert jedoch etwas länger als der Einschalttakt des Förderers. Aus diesem Grund macht der Förderer 12 nach jedem Einschalttakt, während dessen ein Reinigungsvorgang stattfindet, eine etwas längere Pause, wie in Figur 4 schraffiert dargestellt ist. So ist sichergestellt, daß nach Abschluß des Reinigungsvorgangs ausreichend Zeit für den nächsten Injektionsvorgang verbleibt, bevor sich der Förderer wieder in Bewegung setzt.

Die Arbeitstakte des Förderers 12 haben somit eine unterschiedliche Periodendauer, je nachdem, ob ein Reinigungsvorgang stattfindet oder nicht. Die Arbeitstakte der Aufgabevorrichtung (linke Kurve in Figur 4) haben dagegen eine konstante Periodendauer, die mit der durchschnittlichen Periodendauer der Arbeitstakte des Förderers 12 übereinstimmt. In Takt 1 findet der Aufgabevorgang statt, sobald der Förderer angehalten hat. In Takt 2 ist der Aufgabevorgang gegenüber dem Anhalten des Förderers etwas verzögert, und in den nachfolgenden Takten 3, 4 und 5 verschiebt sich der Aufgabevorgang mehr und mehr zum Ende der Stillstandsphase des Förderers. In Takt 5 hat der Förderer jedoch eine längere Stillstandsphase, so daß im anschließenden Takt 6 wieder die gleiche Zeitbeziehung besteht wie im Takt 1. In den anschließenden Takten wiederholen sich diese Vorgänge periodisch. So ist sichergestellt, daß die Produkte 14 in einem konstanten Takt auf dem Förderer 12 aufgegeben werden können und dennoch trotz der unterschiedlichen Periodendauern der Arbeitstakte des Förderers 12 stets positionsgerecht zugeführt werden.

## Patentansprüche

1. Injektionsvorrichtung mit einer Vielzahl paralleler, hin- und hergehend in ihrer Längsrichtung relativ zu einem Produktträger (12) beweglicher Hohlnadeln (16) und einer Einrichtung (20, 22, 24) zur Zufuhr einer in das Produkt (14) zu injizierenden Flüssigkeit in die Hohlnadeln, **dadurch gekennzeichnet, daß** jeder Hohlnadel (16) eine in diese einführbare Reinigungsnadel (32) zugeordnet ist und daß eine Antriebseinrichtung (36) vorgesehen ist, mit der die Reinigungsnadeln (32) zwischen einer Reinigungsstellung, in der sie in die Hohlnadeln (16) eingeführt sind, und einer Injektionsstellung bewegbar sind, in der sie die Hohlnadeln zur Zufuhr der Flüssigkeit freigeben.

2. Injektionsvorrichtung nach Anspruch 1, **dadurch gekennzeichnet, daß** die Hohlnadeln (16) jeweils zu mehreren an einem Nadelregister (10) angeordnet sind, das auch die Einrichtung (20, 22, 24) zur Zufuhr der Flüssigkeit aufweist, und daß die Reinigungsnadeln (32) jeweils zu mehreren an einem Reinigungsregister (30) angeordnet sind, das mit Hilfe der Antriebseinrichtung (36) relativ zu dem Nadelregister (10) beweglich ist.

3. Injektionsvorrichtung nach Anspruch 2, **dadurch gekennzeichnet, daß** die offenen oberen Enden der Hohlnadeln (16) in einer im Nadelregister (10) ausgebildeten Kammer (20) liegen und daß die Reinigungsnadeln (32) flüssigkeitsdicht durch eine obere Wand der Kammer (20) hindurchgeführt sind.

4. Injektionsvorrichtung nach einem der vorstehenden Ansprüche, **dadurch gekennzeichnet, daß** die Hohlnadeln (16) Kanülen-Nadeln sind, die jeweils nur eine einzige axiale Auslaßöffnung an ihrem unteren Ende aufweisen.

5. Injektionsvorrichtung nach einem der vorstehenden Ansprüche, **dadurch gekennzeichnet, daß** der Produktträger ein taktweise antreibbarer Förderer (12) ist.

6. Injektionsvorrichtung nach Anspruch 5. **gekennzeichnet durch** eine Steuereinrichtung (38), die den Takt des Förderers (12) mit dem Takt der Hohlnadeln (16) und dem Takt der Reinigungsnadeln (32) snychronisiert.

7. Injektionsvorrichtung nach Anspruch 6, **dadurch gekennzeichnet, daß** die Periodendauer des Taktes der Reinigungsnadeln (32) ein Vielfaches der Periodendauer des Taktes der Hohlnadeln (16) ist.

8. Injektionsvorrichtung nach Anspruch 7, **dadurch gekennzeichnet, daß** die Reinigungsnadeln (32) ihre Reinigungsstellung jeweils erst erreichen, nachdem die Hohlnadeln (16) aus dem Produkt (14) zurückgezogen sind.

9. Injektionsvorrichtung nach Anspruch 8, **dadurch gekennzeichnet, daß** die Steuereinrichtung (38) dazu ausgebildet ist, die Transportgeschwindigkeit und/oder den Takt des Förderers (12) bei jedem Arbeitstakt der Reinigungsnadeln (32) zu verzögern.

## Claims

1. Injection apparatus with a plurality of parallel hollow needles (16), which can move in a reciprocating manner in their longitudinal direction relative to a product carrier (12), and a device (20, 22, 24) for feeding a fluid which is to be injected into the product (14) into the hollow needles, **characterised in that** a cleaning needle (32) is associated with each hollow needle (16), which cleaning needle can be introduced into the latter, and that a drive device (36) is provided, by means of which device the cleaning needles (32) can be moved between a cleaning position, in which they are introduced into the hollow needles (16), and an injection position, in which they free the hollow needles for feeding the fluid.

2. Injection apparatus according to Claim 1, **characterised in that** the hollow needles (16) are in each case disposed in a plurality at a needle register (10), which also comprises the device (20, 22, 24) for feeding the fluid, and that the cleaning needles (32) are in each case disposed in a plurality at a cleaning register (30), which can move relative to the needle register (10) by means of the drive device (36).

3. Injection apparatus according to Claim 2, **characterised in that** the open top ends of the hollow needles (16) lie in a chamber (20) which is formed in the needle register (10), and that the cleaning needles (32) are passed in a fluid-tight manner through a top wall of the chamber (20).

4. Injection apparatus according to any one of the preceding Claims, **characterised in that** the hollow needles (16) are canula needles which in each case only comprise one single axial outlet opening at their bottom end.

5. Injection apparatus according to any one of the preceding Claims, **characterised in that** the product carrier is a conveyor (12) which can be driven in a cyclic manner.

6. Injection apparatus according to Claim 5, **characterised by** a control device (38) which synchronises the cycle of the conveyor (12) with the cycle of the hollow needles (16) and the cycle of the cleaning needles (32).

7. Injection apparatus according to Claim 6, **characterised in that** the period of the cycle of the cleaning needles (32) is a multiple of the period of the cycle of the hollow needles (16).

8. Injection apparatus according to Claim 7, **characterised in that** the cleaning needles (32) in each case only reach their cleaning position after the hollow needles (16) have been withdrawn from the product (14).

9. Injection apparatus according to Claim 8, **characterised in that** the control device (38) is formed to decelerate the transport speed and/or the cycle of the conveyor (12) upon each working cycle of the cleaning needles (32).

## Revendications

1. Dispositif d'injection comportant une pluralité d'aiguilles creuses (16) parallèles, déplaçables en va et vient dans la direction de leur longueur par rapport à un support de produit (12), ainsi qu'un dispositif (20, 22, 24) pour amener un liquide, à injecter dans le produit (14), dans les aiguilles creuses, **caractérisé en ce qu'**à chaque aiguille creuse (16) est associée une aiguille de nettoyage (32) pouvant être introduite dans celle-ci, et **en ce qu'**il est prévu un dispositif d'entraînement (36) par lequel les aiguilles de nettoyage (32) sont déplaçables entre une position de nettoyage, dans laquelle elles sont introduites dans les aiguilles creuses (16), et une position d'injection dans laquelle elles dégagent les aiguilles creuses pour l'amenée du liquide.

2. Dispositif d'injection selon la revendication 1, **caractérisé en ce que** les aiguilles creuses (16) sont disposées à plusieurs sur un registre d'aiguilles (10) qui comporte aussi le dispositif (20, 22, 24) d'amenée du liquide, et **en ce que** les aiguilles de nettoyage (32) sont disposées à plusieurs sur un registre de nettoyage (30) qui est déplaçable, à l'aide du dispositif d'entraînement (36), par rapport au registre d'aiguilles (10).

3. Dispositif d'injection selon la revendication 2, **caractérisé en ce que** les extrémités supérieures ouvertes des aiguilles creuses (16) se trouvent dans une chambre (20) réalisée dans le registre d'aiguilles (10), et **en ce que** les aiguilles de nettoyage (32) sont guidées, de manière étanche aux liquides, à travers une paroi supérieure de la chambre (20).

4. Dispositif d'injection selon l'une des revendications précédentes, **caractérisé en ce que** les aiguilles creuses (16) sont des aiguilles à canule qui ne présentent chacune qu'un seul orifice de sortie axial à leur extrémité inférieure.

5. Dispositif d'injection selon l'une des revendications précédentes, **caractérisé en ce que** le support de produit est un transporteur (12) qui peut être entraîné de manière cadencée.

6. Dispositif d'injection selon la revendication 5, **caractérisé par** un dispositif de commande (38) qui synchronise la cadence du transporteur (12) à la cadence des aiguilles creuses (16) et à la cadence des aiguilles de nettoyage (32).

7. Dispositif d'injection selon la revendication 6, **caractérisé en ce que** la durée de la période de la cadence des aiguilles de nettoyage (32) est un multiple de la durée de la période de la cadence des aiguilles creuses (16).

8. Dispositif d'injection selon la revendication 7, **caractérisé en ce que** les aiguilles de nettoyage (32) n'atteignent chacune leur position de nettoyage qu'après que les aiguilles creuses (16) sont retirées du produit (14).

9. Dispositif d'injection selon la revendication 8, **caractérisé en ce que** le dispositif de commande (38) est conçu pour ralentir la vitesse de transport et/ou la cadence du transporteur 12 à chaque cycle de travail des aiguilles de nettoyage (32).
